(19) Europäisches Patentamt

European Patent Office

Office européen des brevets

(11) Veröffentlichungsnummer: **0 291 940 B1**

## (12) EUROPÄISCHE PATENTSCHRIFT

(45) Veröffentlichungstag der Patentschrift: **06.10.93**

(51) Int. Cl.⁵: **C08J 3/24**, C08K 5/14, C08K 5/23, C08L 83/04

(21) Anmeldenummer: **88107913.1**

(22) Anmeldetag: **18.05.88**

(54) Verfahren zur Herstellung von Formkörpern oder Überzügen.

(30) Priorität: **21.05.87 DE 3717076**

(43) Veröffentlichungstag der Anmeldung:
**23.11.88 Patentblatt 88/47**

(45) Bekanntmachung des Hinweises auf die Patenterteilung:
**06.10.93 Patentblatt 93/40**

(84) Benannte Vertragsstaaten:
**CH DE FR GB IT LI SE**

(56) Entgegenhaltungen:
**DE-A- 909 995**
**FR-A- 1 363 839**
**FR-A- 2 453 197**
**US-A- 3 832 420**
**US-A- 4 260 536**

**DATABASE WPI, no. 83-26594K, Derwent Publications Ltd, London, GB; & JP-A-58 021 447 (SHINETSU POLYMER K.K.) 20-02-1983**

(73) Patentinhaber: **WACKER-CHEMIE GMBH**
**Hanns-Seidel-Platz 4**
**D-81737 München(DE)**

(72) Erfinder: **Primas, Willi**
**Dr.-Güldenapfel-Ring 34**
**D-8346 Simbach/Inn(DE)**
Erfinder: **Pröschkowitz, Max**
**Grenzstrasse 6**
**D-8262 Altötting(DE)**
Erfinder: **Marsch, Wilhelm**
**Moosen 39**
**D-8261 Haiming(DE)**

**Beschreibung**

Die Herstellung von Formkörpern aus zu Organopolysiloxanelastomeren vernetzbaren, Radikalbildner enthaltenden Massen, wobei die Formgebung durch Formpressen (compression molding), Spritzpressen (transfer molding) oder Spritzgießen (injection molding) erfolgt, ist bereits seit einiger Zeit bekannt. Hierzu sei z. B. auf W. Lynch "Handbook of Silicone Fabrication" Van Nostrand Reinhold Company, New York u.a., 1978, verwiesen. In DATABASE WPI, no. 83-26594K, Derwent Publications Ltd, London, GB (JP-A-58 021 447) ist beispielsweise das Spritzgießen von solchen Massen genannt.

In US-A 4,260,536 ist die Herstellung von Formkörpern durch Extrusion beschrieben, wobei den zu Elastomeren vernetzbaren, Radikalbildner enthaltenden Organopolysiloxanmassen Organopolysiloxane mit Si-gebundenen Wasserstoffatomen zugegeben werden, um eine leichte Entformbarkeit der Formkörper zu erzielen.

Aus US-A 3,832,420 sind zu Elastomeren vernetzbare, Radikalbildner enthaltende Organopolysiloxanmassen bekannt, die ein bei Raumtemperatur festes, kondensationsfähige Gruppen aufweisendes Methylsiliconharz enthalten, wobei Elastomere mit guter Lichtbogenbeständigkeit erhalten werden.

Aus FR-A 2453197 sind Inhibitor-haltige, Platin-katalysierte Silikonkautschukmassen für die Heißluft-Vulkanisation bekannt, die als Bestandteile

(a) Si-gebundene Vinylgruppen aufweisendes Organopolysiloxan

(b) Si-gebundenen Wasserstoff aufweisendes Organopolysiloxan

(c) Platinkatalysator

(d) Inhibitor mit einem Rest der Formel -C-O-O-H und

(e) organisches Peroxid mit der Gruppierung -C-O-O-C- im Molekül enthalten.

Das organische Peroxid (e) wird als Härtungsbeschleuniger den Massen zugesetzt, da der Hydroperoxy-Inhibitor (d) ansonsten in diesen Massen so wirksam ist, daß die Massen erst beim längeren als für die Heißluft-Vulkanisation erwünschten Erhitzen auf etwa 540°C härten. Der Zusatz des organischen Peroxids gestattet dann eine Härtung der Massen bei 370°C.

In DE-A 909 995 ist ein Verfahren zur Herstellung von Siliconelastomeren beschrieben, wobei Organopolysiloxan mit einem Gemisch aus Benzoylperoxid und tert.-Butyl-perbenzoat mindestens 3 Minuten lang bei mindestens 110°C erhitzt wird. Die Vernetzungszeiten sind lang; beispielsweise betragen sie gemäß den Beispielen 10 bis 15 Minuten und eine Formgebung durch Spritzgießen, Spritzpressen oder Formpressen wird nicht erwähnt.

Gemäß FR-A 1363839 werden Organopolysiloxanelastomere mit verbesserten dielektrischen Eigenschaften durch Zugabe von Si-gebundene Wasserstoffatome aufweisenden Organopolysiloxanen zu Radikalbildner enthaltenden Massen erhalten.

Es bestand nun die Aufgabe, ein Verfahren zur Herstellung von Formkörpern oder Überzügen aus zu Organopolysiloxanelastomeren vernetzbaren, Radikalbildner enthaltenden Massen, wobei die Formgebung durch Formpressen, Spritzpressen oder Spritzgießen erfolgt, bereitzustellen, das besonders kurze Vernetzungszeiten ermöglicht, auch bei kompliziert geformten Formkörpern, z. B. solchen mit verhältnismäßig starken Hinterschneidungen, eine besonders leichte und rasche Entformbarkeit der Formkörper auch ohne Mitverwendung von Trennmittel und auch bei Verwendung von verhältnismäßig leicht zugänglichen Stoffen bei der Herstellung der die endgültige Formgebung bewirkenden Teile der für das Formpressen, Spritzpressen bzw. Spritzgießen verwendeten Vorrichtungen gewährleistet und Formkörper bzw. Überzüge mit besonders geringem Abnehmen der Abmessungen, also besonders geringer Schwindung bei der Vernetzung der Massen ergibt. Diese Aufgabe wird durch die Erfindung gelöst.

Gegenstand der Erfindung ist ein Verfahren zur Herstellung von Formkörpern oder Überzügen aus zu Organopolysiloxanelastomeren vernetzbaren, Radikalbildner enthaltenden Massen, wobei die Formgebung durch Formpressen, Spritzpressen oder Spritzgießen erfolgt, dadurch gekennzeichnet, daß die Radikalbildner mindestens ein Radikalbildner mit einer Halbwertzeit in Benzol von 1 Minute bei 60°C bis 149°C und mindestens ein Radikalbildner mit einer Halbwertzeit in Benzol von 1 Minute bei 150°C bis 200°C sind.

Bei der Herstellung von Überzügen nach dem erfindungsgemäßen Verfahren kann es sich beispielsweise um das Umhüllen von elektrischen oder elektronischen Bauteilen handeln.

Beispiele für Radikalbildner mit einer Halbwertzeit in Benzol von 1 Minute, die im allgemeinen mit einer Konzentration von 0,1 Mol Radikalbildner je Liter Benzol bestimmt wird, bei 60°C bis 149°C, sind Dibenzoylperoxid, Bis-(4-chlorbenzoyl)-peroxid, Bis-(2,4-dichlorbenzoyl)-peroxid, bestimmte Peroxycarbonate, wie Diacetyl-peroxydicarbonat, Dimyristylperoxydicarbonat, Dicyclohexylperoxydicarbonat, Bis-(4-tert.-butylcyclohexyl)-peroxydicarbonat, Di-n-butyl-peroxydicarbonat, Di-2-ethylhexyl-peroxydicarbonat und Diisotridecyl-peroxydicarbonat, Azobis-(2,4-dimethylvaleronitril) und Azo-bis-(isobutyronitril).

Beispiele für Radikalbildner mit einer Halbwertzeit in Benzol von 1 Minute, die ebenfalls im allgemeinen mit einer Konzentration von 0,1 Mol Radikalbildner je Liter Benzol bestimmt wird, bei 150°C bis 200°C sind Di-tert.-butylperoxyd, Dicumylperoxyd, 2,5-Bis-(tert.butylperoxyd)-2,5-dimethylhexan, tert.-Butylperbenzoat, tert.-Butylperisononanoat und tert.-Butylperoxyisopropylcarbonat.

Vorzugsweise beträgt der Abstand der Temperatur bei der ein Radikalbildner in Benzol eine Halbwertszeit von 1 Minute hat, mindestens 15°C von der Temperatur, bei der jeder andere Radikalbildner in der gleichen vernetzbaren Masse in Benzol eine Halbwertszeit von 1 Minute hat.

Die Radikalbildner können in den bei dem erfindungsgemäßen Verfahren verwendeten zu Organopolysiloxanelastomeren vernetzbaren, Radikalbildner enthaltenden Massen in den gleichen Gesamtmengen vorliegen, in denen sie auch in den bei den bisher bekannten Verfahren zur Herstellung von Formkörpern aus zu Organopolysiloxanelastomeren vernetzbaren, Radikalbildner enthaltenden Massen, wobei die Formgebung durch Formpressen, Spritzpressen oder Spritzgießen erfolgt, verwendeten zu Organopolysiloxanelastomeren vernetzbaren, Radikalbildner enthaltenden Massen vorliegen konnte. Es sind dies bei den nur durch radikalische Vernetzung zu vernetzenden Massen vorzugsweise 0,1 bis 3 Gewichtsprozent, insbesondere 0,1 bis 1 Gewichtsprozent, jeweils bezogen auf das Gesamtgewicht der jeweiligen Masse.

Vorzugsweise beträgt die Menge von Radikalbildner(n) mit einer Halbwertszeit in Benzol von 1 Minute bei 60° bis 149°C 1 bis 70 Gewichtsprozent, insbesondere 3 bis 60 Gewichtsprozent, jeweils bezogen auf die Gesamtmenge der Radikalbildner.

Als Radikalbildner-Kombinationen sind bei dem erfindungsgemäßen Verfahren Kombinationen von peroxydischen Radikalbildnern bevorzugt.

Besonders bevorzugte Kombinationen von peroxydischen Radikalbildnern sind, wenn die Formgebung durch Formpressen oder Spritzpressen erfolgt, solche von
0,1 bis 1 Gewichtsprozent, bezogen auf das Gesamtgewicht der jeweiligen Masse, Dicumylperoxyd mit
0,05 bis 1 Gewichtsprozent, bezogen auf das Gesamtgewicht der jeweiligen Masse, Dibenzoylperoxyd
und unter diesen letztgenannten Kombinationen, wenn die Formgebung durch Formpressen oder Spritzpressen erfolgt, ist diejenige von
0,35 Gewichtsprozent, bezogen auf das Gesamtgewicht der jeweiligen Masse, Dicumylperoxyd mit
0,15 Gewichtsprozent, bezogen auf das Gesamtgewicht der jeweiligen Masse, Dibenzoylperoxyd
am meisten bevorzugt.

Besonders bevorzugte Kombinationen von peroxydischen Radikalbildnern sind, wenn die Formgebung durch Spritzgießen erfolgt, solche aus
0,1 bis 1 Gewichtsprozent, bezogen auf das Gesamtgewicht der jeweiligen Masse, Dicumylperoxyd ,mit
0,05 bis 1 Gewichtsprozent, bezogen auf das Gesamtgewicht der jeweiligen Masse, Dibenzoylperoxyd und
0,01 bis 0,5 Gewichtsprozent, bezogen auf das Gesamtgewicht der jeweiligen Menge, Bis-(2,4-dichlorbenzoyl)-peroxyd.

Unter diesen Kombinationen von peroxidischen Radikalbildnern ist, wenn die Formgebung durch Spritzgießen erfolgt, wiederum diejenige von
0,35 Gewichtsprozent, bezogen auf das Gesamtgewicht der jeweiligen Masse, Dicumylperoxyd mit
0,12 Gewichtsprozent, bezogen auf das Gesamtgewicht der jeweiligen Masse, Dibenzoylperoxyd und
0,04 Gewichtsprozent, bezogen auf das Gesamtgewicht der jeweiligen Masse, Bis-(2,4-dichlorbenzoyl)-peroxyd besonders bevorzugt.

Abgesehen von den erfindungsgemäß verwendeten Radikalbildner-Kombinationen können die bei dem erfindungsgemäßen Verfahren verwendeten zu Organopolysiloxanelastomeren vernetzbaren, Radikalbildner enthaltenden Massen die gleiche Zusammensetzung haben, wie die nur einen Radikalbildner enthaltenden zu Organopolysiloxanelastomeren vernetzbaren Massen, deren Formgebung durch Formpressen, Spritzpressen oder Spritzgießen erfolgen kann.

Damit die bei dem erfindungsgemäßen Verfahren eingesetzten, Radikalbildner enthaltenden Massen Organopolysiloxanelastomere ergeben, dürfen die in ihnen enthaltenen Organopolysiloxane höchstens 5, insbesondere höchstens 1,5, SiC-gebundene organische Reste mit aliphatischer Kohlenstoff-Kohlenstoff-Mehrfachbindung je 100 Siliciumatome in diesen Organopolysiloxanen enthalten.

Das erfindungsgemäße Verfahren kann in den gleichen Vorrichtungen und bei den gleichen Temperaturen und Drücken durchgeführt werden, wie die bisher bekannten Verfahren zur Herstellung von Formkörpern oder Überzügen aus zu Organopolysiloxanelastomeren vernetzbaren, Radikalbildner enthaltenden Massen, wobei die Formgebung durch Formpressen, Spritzpressen oder Spritzgießen erfolgt.

Soweit es sich bei diesen Massen um solche handelt, die nur durch Radikalbildung vernetzt werden sollen, sind bei Verwendung der oben näher beschriebenen, bevorzugten Peroxydkombinationen aus 2 bzw. 3 Peroxyden 170° bis 190°C bevorzugt.

In den folgenden Beispielen beziehen sich alle Angaben von Teilen und Prozentsätzen auf das Gewicht, soweit nichts anderes angegeben ist, bzw. soweit sinnvoll.

Beispiel 1

a) 100 Teile eines durch Trimethylsiloxygruppen endblockierten Organopolysiloxans aus 99,93 Molprozent Dimethylsiloxaneinheiten und 0,07 Molprozent Vinylmethylsiloxaneinheiten mit einer Viskosität von $8.10^6$ mPa.s bei 25 ° C werden in einem bei 150 ° C betriebenen Kneter zunächst mit 42 Teilen pyrogen in der Gasphase erzeugten Siliciumdioxids mit einer BET-Oberfläche von $200 m^2/g$, dann mit 7 Teilen eines in den endständigen Einheiten je eine Sigebundene Hydroxylgruppe aufweisenden Dimethylpolysiloxans mit einer Viskosität von 40 mPa.s bei 25 ° C und schließlich, nach dem Abkühlen des Kneters, mit 0,35 Teilen Dicumylperoxyd und 0,3 Teilen einer Paste aus gleichen Teilen Dibenzoylperoxyd und eines durch Trimethylsiloxygruppen endblockierten Dimethylpolysiloxans mit einer Viskosität von 250 mPa.s bei 25 ° C vermischt.
b) Die zu einem Organopolysiloxanelastomer vernetzbare, Radikalbildner enthaltende Masse, deren Herstellung vorstehend unter a) beschrieben wurde, wird in einer handelsüblichen Spritzgieß-Vorrichtung ("Allrounder" 270-90-350, wobei es sich bei der Bezeichnung "Allrounder" um ein Registriertes Warenzeichen handelt, Arburg Maschinenfabrik Hehl & Söhne, D-7298 Loßburg), deren Spritzzylinder auf 40 ° C erwärmt ist, während das die endgültige Formgebung der Masse bewirkende Teil dieser Vorrichtung auf 185 ° C erwärmt ist, zu quadratischen Platten mit einer Kantenlänge von etwa 180 mm je Seite, die etwa 20 mm eine Dicke von 6 mm, etwa 130 mm eine Dicke von 2 mm und etwa 30 mm eine Dicke von 1 mm aufweisen, als Probekörper verarbeitet.
c) Bereits nach 35 Sekunden lassen sich die völlig unklebrigen Platten leicht entformen. Beim 6 mm-Querschnitt haben sie nach diesen 35 Sekunden eine Shore-A-Härte von 29-30 und beim 2 mm Querschnitt eine Shore-A-Härte von 45. Beim 6 mm-Querschnitt haben die aus dem Werkzeug entnommenen und dann 4 Stunden auf 200 ° C auf erwärmten ("getemperten") Platten eine Shore-A-Härte von 46.

Beispiel 2

Die in Beispiel 1 unter a) und b) beschriebenen Arbeitsweisen werden wiederholt mit der Abänderung, daß anstelle der 0,35 Teile Dicumylperoxyd und der Peroxyd enthaltenden Paste 0,35 Teile Dicumylperoxyd, 0,25 Teile einer Paste aus gleichen Teilen Dibenzoylperoxyd und des durch Trimethylsiloxygruppen endblockierten Dimethylpolysiloxans mit einer Viskosität von 250 mPa.s bei 25 ° C und 0,08 Teile einer Paste aus gleichen Teilen Bis-(2,4-dichlorbenzoyl)-peroxyd und des Dimethylpolysiloxans der vorstehend angegebenen Art verwendet werden.
Bereits nach 35 Sekunden lassen sich die völlig unklebrigen Platten sehr leicht entformen. Beim 6 mm-Querschnitt haben sie nach diesen 35 Sekunden eine Shore-A-Härte von 31 bis 32 und beim 2 mm-Querschnitt eine Shore-A-Härte von 45. Beim 6 mm-Querschnitt haben die aus dem Werkzeug entnommenen und dann 4 Stunden auf 200 ° C erwärmten Platten eine Shore-A-Härte von 46.

Beispiel 3

Die in Beispiel 2 angegebene Arbeitsweise wird wiederholt mit den Abänderungen, daß der Einspritzdruck nicht $116.10^5$ Pa (abs.), sondern $111.10^5$ Pa (abs.) beträgt, daß 0,4 Teile der Paste aus gleichen Teilen Dibenzoylperoxyd und des durch Trimethylsiloxygruppen endblockierten Dimethylpolysiloxans mit einer Viskosität von 250 mPa.s bei 25 ° C anstelle der 0,25 Teile dieser Paste und 0,1 Teile der Paste aus gleichen Teilen Bis-(2,4-dichlorbenzoyl)-peroxyd und des durch Trimethylsiloxygruppen endblockierten Dimethylpolysiloxans der vorstehend angegebenen Art anstelle der 0,08 Teile der Paste verwendet werden.
Bereits nach 35 Sekunden lassen sich die völlig unklebrigen Platten sehr leicht entformen. Beim 6 mm-Querschnitt haben sie nach diesen 35 Sekunden eine Shore-A-Härte von 41 und beim 2 mm-Querschnitt eine Shore-A-Härte von 53. Beim 6 mm-Querschnitt haben die aus dem Werkzeug entnommenen und dann 4 Stunden auf 200 ° C erwärmten Platten eine Shore-A-Härte von 56.

Vergleichsversuch a)

Die in Beispiel 3 angegebene Arbeitsweise wird wiederholt mit der Abänderung, daß 0,7 Teile Dicumylperoxyd anstelle der dort verwendeten Dicumylperoxydmenge und der zwei Peroxyd enthaltenden

4

Pasten verwendet werden.

Erst nach 80 Sekunden lassen sich die dann noch immer klebrigen Platten entformen. Beim 6 mm-Querschnitt haben sie nach diesen 80 Sekunden eine Shore-A-Härte von 31-32 und beim 2 mm-Querschnitt eine Shore-A-Härte von 49.

Beispiel 4 und Vergleichsversuch b)

Die in Beispiel 2 angegebene Arbeitsweise wird wiederholt mit der Abänderung, daß das die endgültige Formgebung bewirkende Teil der Spritzgieß-Vorrichtung nicht auf 185°C, sondern auf 180°C erwärmt ist.

## Tabelle

### Lineare Schwindung [1)]

%

| | | |
|---|---|---|
| Beispiel 4 | 2) | 3,5 |
| | 3) | 4,5 |
| Vergleichs- | 2) | 4;8 |
| versuch b) | 3) | 5,5 |

1) = Differenz zwischen den 180 mm von zwei Innenseiten-Seiten des die endgültige Formgebung bewirkenden Teils der Spritzgieß-Vorrichtung und einer Kantenlänge des Formkörpers, der in dieser Vorrichtung erzeugt wurde.

2) Vor dem Tempern

3) nach dem Tempern

**Patentansprüche**

1. Verfahren zur Herstellung von Formkörpern oder Überzügen aus zu Organopolysiloxanelastomeren vernetzbaren, Radikalbildner enthaltenden Massen, wobei die Formgebung durch Formpressen, Spritzpressen oder Spritzgießen erfolgt, dadurch gekennzeichnet, daß die Radikalbildner mindestens ein Radikalbildner mit einer Halbwertszeit in Benzol von 1 Minute bei 60°C bis 149°C und mindestens ein Radikalbildner mit einer Halbwertszeit in Benzol von 1 Minute bei 150°C bis 200°C sind.

2. Verfahren nach Anspruch 1, dadurch gekennzeichnet, daß der Abstand der Temperatur, bei der ein Radikalbildner eine Halbwertszeit in Benzol von 1 Minute hat, mindestens 15°C von der Temperatur, bei der jeder andere Radikalbildner in der gleichen vernetzbaren Masse eine Halbwertszeit in Benzol von 1 Minute hat, beträgt.

3. Verfahren nach Anspruch 1 oder 2, dadurch gekennzeichnet, daß, wenn die Formgebung durch Formpressen oder Spritzpressen erfolgt, die Radikalbildner Dicumylperoxyd und Dibenzoylperoxyd sind.

**4.** Verfahren nach Anspruch 1 oder 2, dadurch gekennzeichnet, daß, wenn die Formgebung durch Spritzgießen erfolgt, die Radikalbildner Dicumylperoxyd, Dibenzoylperoxyd und Bis-(2,4-Dichlorbenzoyl)-peroxyd sind.

**Claims**

**1.** Process for the production of mouldings or coatings from materials which contain free-radical generators and can be crosslinked to form organopolysiloxane elastomers, the shaping taking place by compression moulding, transfer moulding or injection moulding, characterised in that the free-radical generators are at least one free-radical generator having a half-life period in benzene of 1 minute at 60°C to 149°C and at least one free-radical generator having a half-life period in benzene of 1 minute at 150°C to 200°C.

**2.** Process according to Claim 1, characterised in that the temperature at which the one free-radical generator has a half-life period in benzene of 1 minute is at least 15°C different from the temperature at which each of the other free-radical generators in the same crosslinkable material has a half-life period in benzene of 1 minute.

**3.** Process according to Claim 1 or 2, characterised in that the free-radical generators are dicumyl peroxide and dibenzoyl peroxide if the shaping takes place by compression moulding or transfer moulding.

**4.** Process according to Claim 1 or 2, characterised in that the free-radical generators are dicumyl peroxide, dibenzoyl peroxide and bis-(2,4-dichlorobenzoyl) peroxide if the shaping takes place by injection moulding.

**Revendications**

**1.** Procédé de formation de corps moulés ou de revêtements à partir de matières qui peuvent se réticuler en élastomères d'organopolysiloxanes, qui contiennent des générateurs de radicaux, le moulage étant réalisé par compression, par transfert (extrusion) ou par injection, procédé caractérisé en ce que les générateurs de radicaux sont au moins un générateur de radicaux ayant une période de demi-vie dans le benzène de 1 minute à une température de 60°C à 149°C et au moins un générateur de radicaux avec une période de demi-vie dans le benzène de 1 minute à une température de 150°C à 200°C.

**2.** Procédé selon la revendication 1, caractérisé en ce qu'il y a une différence de température d'au moins 15°C entre la température à laquelle un générateur de radicaux a, dans le benzène, une période de demi-vie de 1 minute, et la température à laquelle chaque autre générateur de radicaux, dans la même matière réticulable, a, dans le benzène, une période de demi-vie de 1 minute.

**3.** Procédé selon la revendication 1 ou 2, caractérisé en ce que, lorsque le moulage est effectué par compression ou par transfert, les générateurs de radicaux sont le peroxyde de dicumyle et le peroxyde de dibenzoyle.

**4.** Procédé selon la revendication 1 ou 2, caractérisé en ce que, lorsque le moulage est effectué par injection, les générateurs de radicaux sont le peroxyde de dicumyle, le peroxyde de dibenzoyle et le peroxyde de bis-(2,4-dichlorobenzoyle).